# EUROPÄISCHE PATENTSCHRIFT

(11) **EP 0 943 796 B1**
(45) Veröffentlichungstag und Bekanntmachung des Hinweises auf die Patenterteilung: **08.10.2003**
(21) Anmeldenummer: 98119364.2
(22) Anmeldetag: 14.10.1998
(51) Int. Cl.: F02M 37/22, B01D 35/18, B01D 36/00

(54) **Flüssigkeitsfilter zum Reinigen von Kraftstoff**
Liquid filter for filtering fuel
Filtre à liquide pour purifier du carburant

(30) Priorität: 18.03.1998 DE 19811689
(43) Veröffentlichungstag der Anmeldung: 22.09.1999
(73) Patentinhaber: ROBERT BOSCH GMBH, 70442 Stuttgart (DE)
(72) Erfinder: Blazquez, Ivan Garcia, 28033 Madrid (ES); Torres, Enrique Casillas, 28017 Madrid (ES); Sanchez, David Ortiz, 28043 Madrid (ES)

(56) Entgegenhaltungen:
- US-A- 4 619 764
- US-A- 4 666 597
- PATENT ABSTRACTS OF JAPAN vol. 012, no. 165 (C-496), 18. Mai 1988 (1988-05-18) & JP 62 277115 A (NIPPON DENSO CO LTD), 2. Dezember 1987 (1987-12-02)

## Beschreibung

### Stand der Technik

Die Erfindung geht aus von einem Flüssigkeitsfilter zum Reinigen von Kraftstoff nach der im Oberbegriff des Anspruchs 1 näher angegebenen Gattung.

Es ist schon ein solches Flüssigkeitsfilter zum Reinigen von Kraftstoff aus der US-PS 5 433 241 bekannt, bei dem das Gehäuse in Vollkunststoffausführung ausgeführt ist. Dabei hat das Gehäuse ein becherförmiges Unterteil mit einem Zulaufanschluß und einem Rücklaufanschluß eines Druckreglers; ein deckelförmiges Oberteil des Gehäuses hat einen Schlauchstutzen als Ablaufanschluß von der Reinseite. Ein im Unterteil eingebautes Zusatzgehäuse bildet mit dem Unterteil zusammen einen Raum zur Aufnahme des Druckreglers, der den Druck auf der Reinseite eines radial durchströmten Filtereinsatzes begrenzt. Das Zusatzgehäuse bildet mit dem Oberteil einen Innenraum, der den Filtereinsatz aufnimmt. Zur lösbaren Befestigung von Unterteil und Oberteil dient eine in das Unterteil radial eingeschobene, U-förmige Spannfeder. Es ist nun von Nachteil, daß sich dieses Flüssigkeitsfilter mit seinem Kunststoffgehäuse nur zum Reinigen von Benzin eignet, da kein Wasserspeicherraum vorgesehen ist. Auch fehlt eine Heizeinrichtung auf der Schmutzseite. Ferner baut das Flüssigkeitsfilter insofern aufwendig, als sein Gehäuse aus mindestens drei ineinandergesteckten Kunststoffteilen besteht, so daß der Filtereinsatz von einer Doppelwand umgeben ist. Auch kann bei dieser Bauweise das Oberteil mit dem Unterteil nicht durch eine Schnellverschraubung lösbar verbunden werden.

Ferner ist auch ein Flüssigkeitsfilter für Dieselkraftstoff aus der EP 0 702 144 B1 bekannt, das im Gehäuse einen unterhalb des austauschbaren Filtereinsatzes liegenden Wasserspeicherraum aufweist, während im Filterkopf neben den fluidischen und elektrischen Anschlüssen eine elektrische Heizeinrichtung angeordnet ist. Dieses Filter hat ein Gehäuse aus Metall sowie einen mehrteiligen Filterkopf in Modulbauweise, so daß sich diese Gehäusebauweise schlecht für eine Vollkunststoffausführung eignet. Weiterhin fehlt hier ein Überströmventil mit einem zugeordneten Tankanschluß.

### Vorteile der Erfindung

Das erfindungsgemäße Flüssigkeitsfilter mit den kennzeichnenden Merkmalen des Hauptanspruchs hat demgegenüber den Vorteil, daß es ein einfach und kompakt bauendes Dieselfilter ermöglicht, in dessen Gehäuse in Vollkunststoffausführung ein Wasserspeicherraum auf der Reinseite und eine Heizeinrichtung im Zulauf integriert sind. Das Gehäuse läßt sich trotzdem im wesentlichen zweiteilig ausbilden und kommt ohne ein drittes Gehäuseteil aus, was platzsparend und vor allem kostengünstig ist; ein verschmutzter Filtereinsatz läßt sich dadurch leicht austauschen.

Durch die in den Unteransprüchen aufgeführten Maßnahmen sind vorteilhafte Weiterbildungen und Verbesserungen des im Anspruch 1 angegebenen Flüssigkeitsfilters möglich. Besonders vorteilhaft ist eine Ausbildung nach den Ansprüchen 2 und 3, wodurch die elektrische Heizeinrichtung besonders zweckmäßig im Gehäuse integriert werden kann. Besonders vorteilhafte und kompakte Bauweisen ergeben sich nach den Ansprüchen 4 bis 7, so daß in dem Unterteil mit Hilfe einer am Filtereinsatz anliegenden Formdichtung neben der Abdichtung von Schmutz- und Reinseite auch die notwendigen Druckmittelverbindungen zur Heizeinrichtung geschaffen werden, wobei die Heizeinrichtung unterhalb des Wasserspeicherraums im Sockelabschnitt raumsparend angeordnet werden kann. Dabei werden die Dichtfunktionen und die Verbindungsfunktionen in besonders einfacher und günstiger Weise hergestellt. Besonders zweckmäßige Ausgestaltungen der Anschlüsse am Gehäuse lassen sich erzielen, wenn das Flüssigkeitsfilter gemäß den Ansprüchen 9 und 10 ausgeführt wird. Ferner ist es vorteilhaft, wenn gemäß Anspruch 11 die beiden Gehäuseteile mittels eines Schnell-Schraubverschlusses lösbar miteinander verbunden werden. Die Innenabdichtung zwischen deckelartigem Oberteil und Filtereinsatz kann dabei gemäß Anspruch 12 günstig ausgebildet werden. Ferner ist es von Vorteil, das Flüssigkeitsfilter gemäß Anspruch 13 auszuführen, wodurch ein Überströmventil am Deckel angebaut werden kann und die Abflüsse zur Einspritzpumpe bzw. zum Tank am deckelförmigen Oberteil auf gleicher Höhe angeordnet werden können. Günstig ist ferner, wenn das Überströmventil gemäß Anspruch 14 als austauschbarer Ventilmodul am Oberteil angeordnet wird. Für eine einfache Montage und sichere Betriebsweise ist es vorteilhaft, wenn gemäß Anspruch 15 eine Verdrehsicherung für den Filtereinsatz im Gehäuse vorgesehen wird. Ferner wird durch eine Ausbildung nach den Ansprüchen 16, 17 eine kompakte, kostengünstige und relativ einfache Bauweise begünstigt. Weitere vorteilhafte Ausgestaltungen ergeben sich aus den übrigen Ansprüchen, der Beschreibung und der Zeichnung.

### Zeichnung

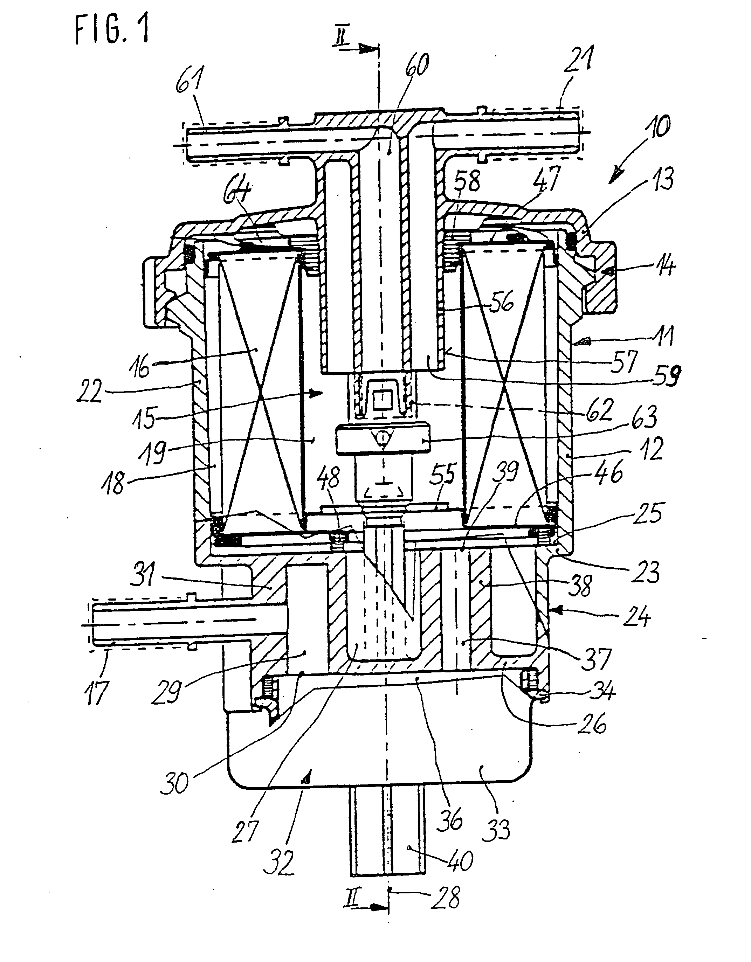

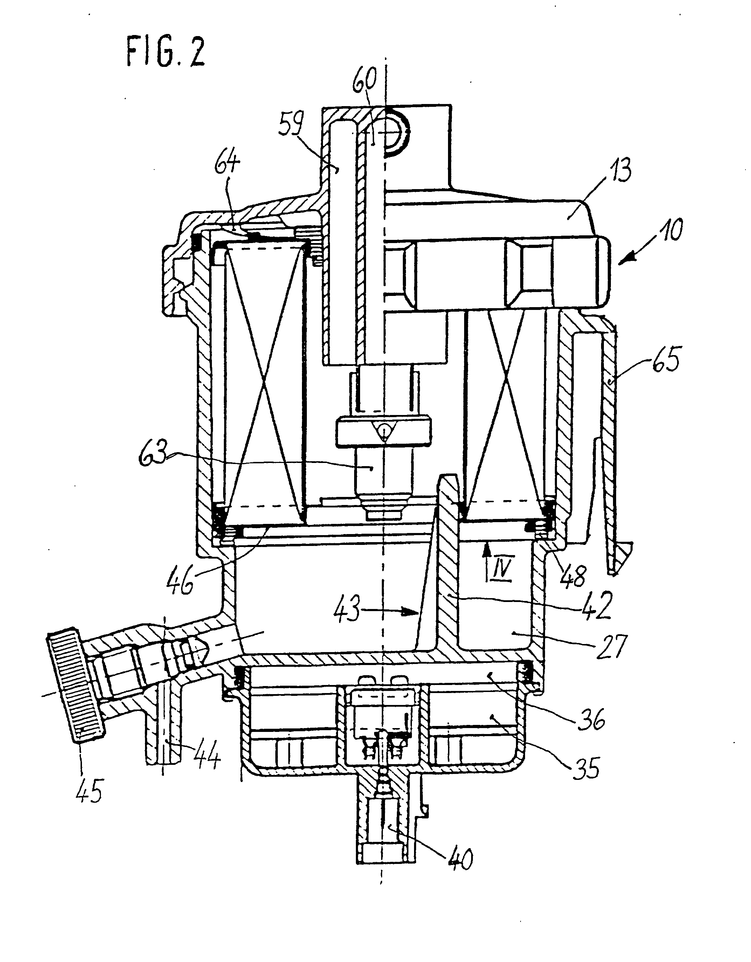

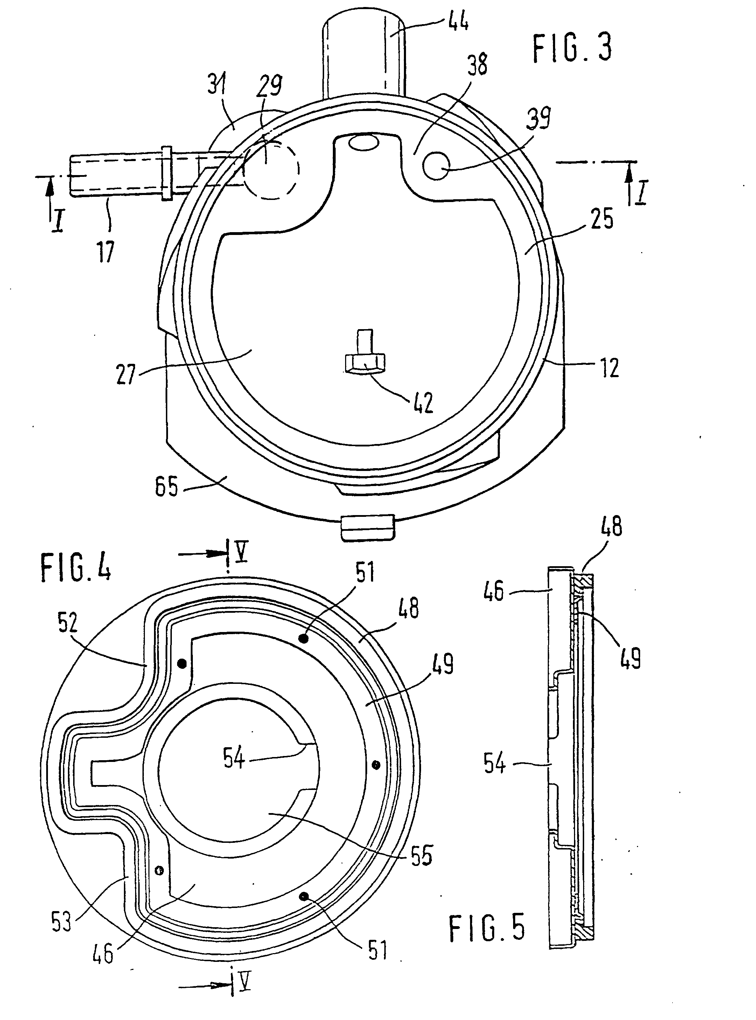

Ein Ausführungsbeispiel der Erfindung ist in der Zeichnung dargestellt und in der nachfolgenden Beschreibung näher erläutert. Es zeigen die Figur 1 einen Längsschnitt durch ein Flüssigkeitsfilter zum Reinigen von Dieselkraftstoff in vereinfachter Darstellung, wobei der Schnittverlauf teilweise nach I-I in Figur 3 dargestellt ist, Figur 2 einen Längsschnitt durch das Flüssigkeitsfilter nach II-II in Figur 1 in vereinfachter Darstellung, Figur 3 eine Draufsicht auf das Unterteil eines Gehäuses des Flüssigkeitsfilters nach Figur 1, Figur 4 eine Ansicht der Endkappe nach Pfeil IV in Figur 2 mit einer gegenüber Figur 1 leicht geänderten Halterung des Formdichtrings und Figur 5 einen Längsschnitt nach IV-IV in Figur 4.

### Beschreibung des Ausführungsbeispiels

Die Figur 1 zeigt einen Längsschnitt durch ein Flüssigkeitsfilter 10 zum Reinigen von Dieselkraftstoff mit einem zweiteiligen Gehäuse 11, das in Vollkunststoffausführung ausgebildet ist. Das Gehäuse hat ein im wesentlichen becherförmiges Unterteil 12 und ein deckelförmiges Oberteil 13, die beide aus Kunststoff bestehen. Unterteil und Oberteil sind durch einen Schnell-Schraubverschluß 14 lösbar miteinander verbunden, wozu ein entsprechendes Steilgewinde vorgesehen ist und das Oberteil 13 das Unterteil 12 außen übergreift. In dem vom Unterteil 12 und Oberteil 13 eingeschlossenen Innenraum 15 ist ein radial von innen nach außen durchströmter Filtereinsatz 16 angeordnet, der zwischen eine mit einem Zulaufanschluß 17 verbundene Schmutzseite 18 und einen mit einer Reinseite 19 verbundenen Ablaufanschluß 21 geschaltet ist.

Wie die Figur 1 in Verbindung mit Figur 2 näher zeigt, geht das becherförmige Unterteil 12 von einem kreiszylindrischen, zum Oberteil 13 hin offenen Abschnitt 22 über eine ringförmige Schulter 23 in einen Sockelabschnitt 24 über, dessen Außendurchmesser gegenüber dem Abschnitt 22 verringert ist. Die Schulter bildet dadurch eine dem Innenraum 15 zugewandte, ringförmig verlaufende Schulterfläche 25. In dem unterhalb der Schulter 23 liegenden Sockelabschnitt 24 ist zwischen dessen Boden 26 und dem Filtereinsatz 16 ein Wasserspeicherraum 27 ausgebildet, der mit der Reinseite 19 im Filtereinsatz 16 Verbindung hat.

Wie Figur 1 ferner zeigt, ist an dem Sockelabschnitt 24 der Zulaufanschluß 17 angeordnet, der in einer radial zur Längsachse 28 des Flüssigkeitsfilters 10 verlaufenden Ebene liegt und der zugleich schräg zur Mantelfläche des Sockelabschnitts 24 verläuft, wie dies Figur 3 besonders deutlich zeigt, die eine Draufsicht auf das Unterteil 12 darstellt. Der Zulaufanschluß 17 ist als Schlauchanschlußstutzen ausgebildet und führt das ankommende Druckmittel unmittelbar in einen Zuströmkanal 29. Um diesen Zuströmkanal 29 im Sockelabschnitt 24 unterzubringen, ist im Bereich dessen Außenumfangs eine hülsenförmige Verdickung 31 angeformt, wie dies Figur 3 besonders deutlich zeigt. Der Zulaufanschluß 17 führt radial an diese hülsenförmige Verdickung 31.heran. Der Zuströmkanal 29 ist wie eine sacklochartige Ausnehmung ausgebildet, ist also in der Schulterfläche 25 geschlossen, während er eine im Boden 26 liegende Öffnung 30 aufweist. Die Achse des Zuströmkanals 29 verläuft ebenfalls parallel zu der Längsachse 28 des Flüssigkeitsfilters 10.

Wie Figur 1 in Verbindung mit Figur 2 näher zeigen, ist im Gehäuse 11 eine elektrische Heizeinrichtung 32 integriert, indem sie in kompakter und raumsparender Bauweise unterhalb des Sockelabschnitts 24 angeordnet ist. Das Gehäuse 11 weist zu diesem Zweck ein im wesentlichen becherförmiges Schalenteil 33 auf, das mit seinem freien Rand 34 dicht und fest am Boden 26 des Sockelabschnitts 24 befestigt ist. Das Schalenteil 33 besteht ebenfalls aus Kunststoff und wird zweckmäßiger Weise mit dem Unterteil 12 verschweißt. Das Schalenteil 33 nimmt in seinem Inneren an sich bekannte elektrische Heizelemente 35 auf, die von dem zu reinigenden Flüssigkeitsstrom umspült werden. Diese Heizelemente 35 liegen somit in einem Heizungsraum 36, der einerseits über die Öffnung 31 des Zuströmkanals 29 mit dem Zulaufanschluß 17 Verbindung hat, während er andererseits über einen Abströmkanal 37 mit der Schmutzseite 18 am Filtereinsatz 16 in Verbindung steht. Außen am Schalenteil 33 ist zentrisch in der Längsachse 28 ein elektrischer Steckanschluß 40 für eine elektrische Heizeinrichtung 32 angeordnet.

Wie aus Figur 1 in Verbindung mit Figur 3 näher zu erkennen ist, verläuft im Sockelabschnitt 24 eine zweite hülsenförmige Verdickung 38, in welcher der Abströmkanal 37 angeordnet ist. Wie dabei Figur 3 näher zeigt, liegt diese zweite Verdickung 38 etwa um einen Drehwinkel von ca. 90° zur ersten hülsenförmige Verdickung 31 versetzt und ist in ihrer radialen Ausdehnung kleiner. Diese zweite Verdickung 38 liegt ebenfalls im Bereich des Außenumfangs des Sockelabschnitts 24, so daß der in ihr angeordnete, gerade verlaufende Abströmkanal 37 eine Kanalöffnung 39 bildet, die unmittelbar neben der Schulter 23 liegt und dabei von einer Ausbuchtung der Schulterfläche 25 umschlungen ist, wie dies Figur 3 deutlich zeigt.

Ferner ist in dem Sockelabschnitt 24 im Bereich des Wasserspeicherraums 27 eine vom Boden 26 aus senkrecht nach oben ragende, fingerartige Rippe 42 angeordnet, die als Teil einer Verdrehsicherung 43 für den Filtereinsatz 16 dient. Im Bereich zwischen den beiden Verdickungen 31 und 38 ist am Boden 26 des Sockelabschnitts 24 ein Wasserablaß 44 angeordnet, der durch eine Verschlußschraube 45 absperrbar ist. Durch diese Ausbildung kann das Unterteil 12 des Gehäuses 11 als einstückiges Teil aus Kunststoff gespritzt werden.

Bei dem im Innenraum 15 des Gehäuses 11 angeordneten Filtereinsatz 16, handelt es sich um einen üblichen, kreisringförmigen Sternfiltereinsatz, der an seiner unteren Endkappe 46 und seiner oberen Endkappe 47 zur Trennung von Schmutzseite 18 und Reinseite 19 abgedichtet wird. Zu diesem Zweck ist an der ringförmigen, unteren Endkappe 46 eine besondere Formdichtung 48 angeordnet, welche die Abdichtung zwischen der Schulterfläche 25 im Gehäuse 11 und dem Filtereinsatz 16 übernimmt.

Die Figur 4 zeigt nun eine Ansicht der unteren Endkappe 46 nach Pfeilrichtung IV in Figur 2, aus der der besondere Verlauf der Formdichtung 48 erkennbar wird. Wie die Figur 4 in Verbindung mit Figur 5 näher zeigt, ist auf der kreisringförmigen Endkappe 46 ein ringförmig verlaufendes Halteblech 49 durch mehrere Schweißpunkte 51 befestigt, so daß die Formdichtung 48 mit ihrem L-förmigen Querschnitt eingehängt werden kann. Formdichtung 48 und Halteblech 49 sind so ausgeführt, daß die Formdichtung 48 im wesentlichen entlang des äußeren Umfangs der Endkappe 46 verläuft, jedoch in einem der ersten Verdickung 31 zugeordneten Bereich eine erste Einbuchtung 52 und im Bereich der Kanalöffnung 39 eine der zweiten Verdickung 38 zugeordnete, zweite Einbuchtung 53 aufweist. Bei der Montage des Filtereinsatzes 16 in dem Unterteil 12 kommt dabei die Formdichtung 48 derart auf der Schulterfläche 25 zu liegen, daß der Abströmkanal 37 über seine Kanalöffnung 39 unmittelbar mit der Schmutzseite 18 am Filtereinsatz 16 Verbindung hat. Die axiale Höhe der Formdichtung 48 ist dabei so groß gewählt, daß zwischen der Kanalöffnung 39 und der unteren Endkappe 46 ein ausreichend hoher, radial sich erstreckender Durchflußquerschnitt verbleibt, über den das zu reinigende Druckmittel nach außen in den ringförmigen Raum zwischen den Filtereinsatz 16 und dem Abschnitt 22 des Gehäuses 11 strömen kann.

In Figur 4 ist ferner besonders deutlich eine Nut 54 in der unteren Endkappe 46 erkennbar, in welche die Rippe 42 zum Erreichen einer Funktion der Verdrehsicherung 43 eingeführt wird. Die axiale Länge dieser Rippe 42 ist dabei so groß gewählt, daß sie in den Filtereinsatz 16 hineinragt. Über eine zentrale Öffnung 55 in der unteren Endkappe 46 steht die Reinseite 19 unmittelbar mit dem Wasserspeicherraum 27 in Verbindung.

Am deckelförmigen Oberteil 13 ist zentral ein zylindrischer Rohrstutzen 56 ausgebildet, der in den Filtereinsatz 16 hineinragt und an dessen Mantelfläche 57 eine ringförmige Dichtmanschette 58 anliegt. Diese Dichtmanschette 58 sitzt am inneren Rand der oberen Endkappe 47 und dichtet somit zwischen Schmutzseite 18 und Reinseite 19 ab. An dem Rohrstutzen 56 ist der Ablaufanschluß 21 angeordnet, der als radial abstehender Schlauchanschlußstutzen ausgeführt ist und der über einen Ablaufkanal 59 mit ringförmigen Querschnitt mit der Reinseite 19 in Verbindung steht. Der ringförmige Ablaufkanal 59 umgibt einen zentral liegenden, zweiten Ablaufkanal 60, der in winkliger Form geführt ist und zu einem zweiten Ablaufanschluß 61 führt. Der zweite Ablaufanschluß 61 liegt gleichachsig zum ersten Ablaufanschluß 21 und ist wie dieser als Schlauchanschlußstutzen ausgeführt. Beide Anschlüsse 21, 61 liegen somit in einer radial zur Längsachse 28 des Flüssigkeitsfilters verlaufenden Ebene. Der zweite Ablaufkanal 60 weist am Ende des Rohrstutzens 56 eine in die Reinseite 19 hineinragende, rohrförmige Verlängerung 62 auf, an der ein Überströmventil 63 befestigt ist. Dieses Überströmventil 63 ist als austauschbare Ventilpatrone mit einem federbelasteten Kugelventil ausgeführt und ermöglicht ein Abströmen von Druckmittel aus der Reinseite 19 zum zweiten Ablaufanschluß 61, wenn der im Überströmventil 63 eingestellte Druck überschritten wird.

Um den Filtereinsatz 16 im Innenraum 15 in seiner Lage zu halten, ist zwischen dem Oberteil 13 und der oberen Endkappe 47 eine Wellfeder 64 angeordnet, welche den Filtereinsatz 16 mit der Formdichtung 48 auf die Schulterfläche 25 drückt und somit für eine sichere Abdichtung zwischen Schmutzseite und Reinseite sorgt. Um den Flüssigkeitsfilter 10 an einem anderen Maschinenteil befestigen zu können, ist am Unterteil 12 des Gehäuses 11 ein Flansch 65 angeformt, wie dies besonders deutlich aus Figur 2 erkennbar ist.

Die Wirkungsweise des Flüssigkeitsfilters 10 wird wie folgt erläutert, wobei die grundsätzliche Funktion derartiger Filter als bekannt vorausgesetzt wird.

Der zu reinigende Dieselkraftstoff wird dem Flüssigkeitsfilter 10 am Zulaufanschluß 17 zugeführt und fließt über den Zuströmkanal 29 unmittelbar in den Heizungsraum 36 der elektrischen Heizeinrichtung 32. Bei Bedarf wird dort der Kraftstoff durch die elektrischen Heizelemente 35 erwärmt und fließt dann vom Heizungsraum 36 weiter in den Abströmkanal 37. Über die Kanalöffnung 39 in der Schulterfläche 25 und durch die von der Formdichtung 48 abgegrenzte Ausnehmung zwischen der unteren Endkappe 46 sowie der Schulterfläche 25 gelangt er auf die Schmutzseite 18 des Filtereinsatzes 16. Der Dieselkraftstoff durchströmt radial von außen nach innen den sternförmig aufgebauten Filtereinsatz 16 und gelangt gereinigt auf die Reinseite 19. Beim Durchströmen des Filterpapiers im Filtereinsatz 16 wird nicht nur der Kraftstoff vom Schmutz gesäubert, sondern auch Wasser abgeschieden, das dann auf der Reinseite 19 über die Öffnung 55 hinunter in den Wasserspeicherraum 27 gelangen und sich dort sammeln kann. Abgeschiedenes Wasser kann aus dem Wasserspeicherraum 27 über den Wasserablaß 44 durch Öffnen mittels der Verschlußschraube 45 entfernt werden. Der gereinigte Kraftstoff gelangt von der Reinseite 19 über den ersten Ablaufkanal 59 mit ringförmigen Querschnitt zum ersten Ablaufanschluß 21 und von dort weiter zu einer Einspritzpumpe bzw. einem Einspritzsystem. Bei Überschreiten eines vorgegebenen Drucks kann auch von der Reinseite 19 Kraftstoff über das Überströmventil 63 zum zweiten Ablaufanschluß 61 abströmen und von dort zum Tank zurückfließen. Bei diesem Flüssigkeitsfilter 10, das in der Regel in aufrechter Lage eingebaut und betrieben wird, ist somit dem Filtereinsatz 16 in dem ankommenden Kraftstoffstrom stets eine Heizeinrichtung vorgeschaltet, so daß ein Verstopfen des Filters bei kalten Temperaturen vermeidbar ist.

Bei vorliegendem Flüssigkeitsfilter 10, bei dem Wasserabscheidung, Überströmventil sowie Heizeinrichtung integriert sind, läßt sich das Gehäuse 11 in Vollkunstoffausführung herstellen, wobei im wesentlichen lediglich ein Unterteil 12 und ein Oberteil 13 nötig ist, die bei einem Austausch eines verbrauchten Filtereinsatzes 16 leicht voneinander trennbar sind. Das Flüssigkeitsfilter 10 baut besonders kompakt, wobei der Wasserspeicherraum 27 und die Heizungseinrichtung 32 auf engstem Raum unterhalb des Filtereinsatzes 16 angeordnet sind. Zudem ist das Überströmventil im Inneren des Flüssigkeitsfilters 10 integriert, so daß der Abfluß von der Reinseite zur Einspritzpumpe einerseits und andererseits über den zweiten Ablaufanschluß 61 zum Tank, am Oberteil 13 in gleicher Bauhöhe ausgebildet sind. Die Verdrehsicherung 43 sorgt für eine einfache und sichere Montage des Filtereinsatzes 16, wobei die Formdichtung 48 mit ihrer zweiten Einbuchtung 53 den Durchflußquerschnitt herstellt. Als Filtereinsatz 16 kann dabei ein bisher vorhandenes Serienteil verwendet werden, das lediglich durch eine spezielle Formdichtung 48 an die besonderen Einbauverhältnisse angepaßt wird. Zudem ist das Gehäuse 11 im Sockelabschnitt 24 so ausgebildet, daß es ohne große Änderungen auch für andere Einsatzfälle geeignet ist, insbesondere kann bei Bedarf in der ersten Verdickung 31 auch ein temperaturabhängig schaltendes Umschaltventil angeordnet werden, wobei die erste Einbuchtung 52 einen Durchflußquerschnitt mitformt.

Selbstverständlich sind an dem gezeigten Flüssigkeitsfilter 10 Änderungen möglich, ohne vom Gedanken der Erfindung gemäß Anspruch 1 abzuweichen.

## Patentansprüche

1. Flüssigkeitsfilter zum Reinigen von Kraftstoff mit einem aus Kunststoff bestehenden Gehäuse (11) das ein becherförmiges Unterteil (12) mit einem Zulaufanschluß (17) und ein deckelartiges Oberteil (13) mit einem Ablaufanschluß (21) für gereinigten Kraftstoff aufweist, wobei Unterteil (12) und Oberteil (13) lösbar miteinander verbunden sind und in ihrem Inneren einen hohlzylindrischen, austauschbaren Filtereinsatz (16) aufnehmen, der radial von außen nach innen durchströmt ist und zwischen Zulauf- und Ablaufanschluß geschaltet ist, wobei seine obere stirnseitige Endkappe (47) dichtend am Oberteil anliegt, während seine untere Endkappe (46) zwischen Schmutz- und Reinseite abdichtend im Gehäuse (11) angeordnet ist, **dadurch gekennzeichnet, daß** das Unterteil (12) im Bereich zwischen einem Boden (26) und dem Filtereinsatz (16) einen den Zulaufanschluß (17) aufweisenden Sockelabschnitt (24) hat, in dem ein Wasserspeicherraum (27) angeordnet ist, der mit der Reinseite (19) des Flüssigkeitsfilters (10) und mit einem Wasserablaß (44) in Verbindung steht und daß im Unterteil (12) unterhalb des Wasserspeicherraums (27) eine elektrische Heizeinrichtung (32) angeordnet ist, die über einen Zuströmkanal (29) mit dem Zulaufanschluß (17) und über einen Abströmkanal (37) mit der Schmutzseite (18) des Filtereinsatzes (16) Verbindung hat, wobei Zuströmkanal (29) und Abströmkanal (37) im Sockelabschnitt (24) angeordnet sind.

2. Flüssigkeitsfilter nach Anspruch 1, **dadurch gekennzeichnet, daß** die Heizeinrichtung (32) in einem einen elektrischen Anschluß (40) aufweisenden Schalenteil (33) angeordnet ist, das mit seinem Rand (34) mit dem becherförmigen Unterteil (12) im Bereich von dessen Boden (26) dicht und fest verbunden ist.

3. Flüssigkeitsfilter nach Anspruch 2, **dadurch gekennzeichnet, daß** das Schalenteil (33) aus Kunststoff besteht und mit dem Unterteil (12) unlösbar verbunden ist, insbesondere verschweißt ist.

4. Flüssigkeitsfilter nach einem der Ansprüche 1 bis 3, **dadurch gekennzeichnet, daß** zwischen der unteren Endkappe (46) des Filtereinsatzes (16) und dem Unterteil (12) des Gehäuses (11) eine Schmutz- (18) und Reinseite (19) voneinander trennende Formdichtung (48) angeordnet ist, die eine dem Filtereinsatz (16) zugewandte, vom Abströmkanal (37) gebildete Kanalöffnung (39) mit der Schmutzseite (18) des Filtereinsatzes (16) verbindet.

5. Flüssigkeitsfilter nach Anspruch 4, **dadurch gekennzeichnet, daß** die Kanalöffnung (39) im Bereich der kreisförmigen Außenwand des Sockelabschnittes (24) liegt und daß die Formdichtung (48) im wesentlichen eine kreisringförmige Form aufweist, die mindestens eine im Bereich der Kanalöffnung (39) liegende, nach innen zu verlaufende und die Kanalöffnung (39) teilweise umschlingende Einbuchtung (53) aufweist.

6. Flüssigkeitsfilter nach einem der Ansprüche 1 bis 5, **dadurch gekennzeichnet, daß** das Unterteil (12) am Übergang in den Sockelabschnitt (24) eine innenliegende Schulter (23) aufweist und daß der Sockelabschnitt (24) zumindest im Bereich des Abströmkanals (37), insbesondere dessen Kanalöffnung (39), eine achsparallel verlaufende Verdickung (38) aufweist und daß an deren Schulterfläche (25) die Formdichtung (48) anliegt.

7. Flüssigkeitsfilter nach einem der Ansprüche 5 bis 6, **dadurch gekennzeichnet, daß** die Formdichtung (48) im Bereich ihrer kreisförmigen Abschnitte im wesentlichen am Außenrand der unteren Endkappe (46) verläuft und die Einbuchtung (53) in ihrer radialen Ausdehnung gleich oder kleiner ist, als die radiale Breite der ringförmigen, unteren Endkappe (46).

8. Flüssigkeitsfilter nach einem der Ansprüche 1 bis 7, **dadurch gekennzeichnet, daß** das den Filtereinsatz (16) und den Wasserspeicherraum (27) umfassende Unterteil (12) einstückig ausgebildet ist.

9. Flüssigkeitsfilter nach einem der Ansprüche 1 bis 8, **dadurch gekennzeichnet, daß** der Zulaufanschluß (17) ein Anschlußstutzen ist, der in einer radial zur Filterlängsachse (28) verlaufenden Ebene liegt und in einem Bereich an die Außenwand des Sockelabschnitts (24) heranführt, in dem ein achsparallel zur Filterlängsachse verlaufender Zuströmkanal (29) im Sockelabschnitt (24) verläuft und über eine Öffnung (30) im Boden (26) mit der Heizungseinrichtung (32) Verbindung hat.

10. Flüssigkeitsfilter nach einem der Ansprüche 4 bis 9, **dadurch gekennzeichnet, daß** der Abströmkanal (37) gerade verläuft, insbesondere achsparallel zur Filterlängsachse (28) und seine Kanalöffnung (39) in einem verbreiterten Bereich der Schulterfläche (25) liegt.

11. Flüssigkeitsfilter nach einem der Ansprüche 1 bis 10, **dadurch gekennzeichnet, daß** das deckelförmige Oberteil (13) über einen Schnell-Schraubverschluß (14) mit dem Unterteil (12) lösbar verbunden ist.

12. Flüssigkeitsfilter nach Anspruch 11, **dadurch gekennzeichnet, daß** das Oberteil (13) einen zentralen, in den Filtereinsatz (16) hineinragenden Rohrstutzen (56) aufweist, an dessen Mantelfläche (57) ein Schmutz- und Reinseite voneinander trennender Dichtring (58) anliegt, der insbesondere am Innenrand der oberen Endkappe (47) angebracht ist.

13. Flüssigkeitsfilter nach Anspruch 12, **dadurch gekennzeichnet, daß** das Oberteil (13) einen radial zur Längsachse verlaufenden Stutzen als Ablaufanschluß (21) aufweist, dessen Ablaufkanal (59) in abgewinkelter Form über den Rohrstutzen (56) mit der Reinseite (19) Verbindung hat und daß ein zweiter, insbesondere gleichachsig zum ersten Schlauchstutzen liegender Ablaufstutzen (61) angeordnet ist, der über ein Überströmventil (63) mit der Reinseite (19) Verbindung hat.

14. Flüssigkeitsfilter nach Anspruch 13, **dadurch gekennzeichnet, daß** das Überströmventil (63) als Ventilpatrone ausgebildet ist, die am freien Ende des Rohrstutzens (56) angeordnet ist und in den reinseitigen Innenraum (19) des Filtereinsatzes (16) ragt und die einen zum zweiten Ablaufstutzen (61) führenden, zweiten Ablaufkanal (60) absichert.

15. Flüssigkeitsfilter nach einen der Ansprüche 1 bis 14, **dadurch gekennzeichnet, daß** für den Filtereinsatz (16) eine Verdrehsicherung (43) vorgesehen ist, die insbesondere eine am Boden (26) befestigte und die untere Endkappe (46) in ihrer Drehlage sichernde, fingerartige Rippe (42) aufweist.

16. Flüssigkeisfilter nach Anspruch 13 oder 14, **dadurch gekennzeichnet, daß** der erste Ablaufkanal (59) im Rohrstutzen (56) einen ringförmigen Querschnitt aufweist und konzentrisch zum zweiten Ablaufkanal (60) verläuft.

17. Flüssigkeitsfilter nach einem der Ansprüche 4 bis 16, **dadurch gekennzeichnet, daß** die Kanalöffnung (39) und die Schulterfläche (25) in der gleichen radialen Ebene liegen, von der die untere Endkappe (46) durch den Formdichtring (48) im Abstand gehalten wird.

18. Flüssigkeitsfilter nach einem der Ansprüche 4 bis 17, **dadurch gekennzeichnet, daß** an der kreisringförmig ausgebildeten, unteren Endkappe (46) ein Halteblech (49) befestigt ist, das mit der Endkappe einen radial nach außen offenen, ringförmig verlaufenden Schlitz bildet und daß die einen L-förmigen Querschnitt aufweisende Formdichtung (48) mit ihrem einen Schenkel in den Schlitz eingehängt ist.

19. Flüssigkeitsfilter nach einem der Ansprüche 1 bis 18, **dadurch gekennzeichnet, daß** der Wasserablaß (44) einen Ablaufstutzen aufweist, der radial außen am Sockelabschnitt (24) angeordnet ist und sich in Höhe des Bodens (26) in den Wasserspeicherraum (27) hinein öffnet.

20. Flüssigkeitsfilter nach einem der Ansprüche 1 bis 19, **dadurch gekennzeichnet, daß** außen am Unterteil (12) in der Höhe des Filtereinsatzes (16) zum Befestigen des Flüssigkeitsfilters (10) an einem Maschinenteil dienende Befestigungsmittel (65) angeordnet sind.

## Claims

1. Liquid filter for the purification of fuel, with a housing (11) which consists of plastic and has a bowl-shaped lower part (12) with an inflow connection (17) and a lid-like upper part (13) with an outflow connection (21) for purified fuel, the lower part (12) and the upper part (13) being connected releasably to one another and receiving in their interior a hollow-cylindrical exchangeable filter insert (16), through which the flow passes radially from the outside inwards and which is inserted between the inflow and the outflow connection, the upper end-face end cap (47) of the said filter insert coming to bear sealingly on the upper part, whilst the lower end cap (46) of the said filter insert is arranged in the housing (11) so as to seal off between the dirty side and the clean side, **characterized in that** the lower part (12) has, in the region between a bottom (26) and the filter insert (16), a plinth portion (24) which has the inflow connection (17) and in which is arranged a water storage space (27) which is connected to the clean side (19) of the liquid filter (10) and to a water discharge (44), and **in that** the lower part (12) has arranged in it, below the water storage space (27), an electrical heating device (32) which is connected to the inflow connection (17) via an inflow duct (29) and to the dirty side (18) of the filter insert (16) via an outflow duct (37), the inflow duct (29) and outflow duct (37) being arranged in the plinth portion (24).

2. Liquid filter according to Claim 1, **characterized in that** the heating device (32) is arranged in a shell part (33) which has an electrical connection (40) and which is sealingly and firmly connected with its edge (34) to the bowl-shaped lower part (12) in the region of the bottom (26) of the latter.

3. Liquid filter according to Claim 2, **characterized in that** the shell part (33) consists of plastic and is unreleasably connected, in particular welded, to the lower part (12).

4. Liquid filter according to one of Claims 1 to 3, **characterized in that**, between the lower end cap (46) of the filter insert (16) and the lower part (12) of the housing (11) is arranged a form seal (48) which separates a dirty side (18) and a clean side (19) from one another and which connects to the dirty side (18) of the filter insert (16) a duct orifice (39) facing the filter insert (16) and formed by the outflow duct (37).

5. Liquid filter according to Claim 4, **characterized in that** the duct orifice (39) lies in the region of the circular outer wall of the plinth portion (24), and **in that** the form seal (48) has essentially an annular form which has at least one indentation (53) which lies in the region of the duct orifice (39) and runs inwards and which loops partially around the duct orifice (39).

6. Liquid filter according to one of Claims 1 to 5, **characterized in that** the lower part (12) has an inner shoulder (23) at the transition into the plinth portion (24), and **in that** the plinth portion (24) has, at least in the region of the outflow duct (27), in particular the duct orifice (39) of the latter, a thickening (38) which runs axially parallel, and **in that** the form seal (48) bears against the shoulder surface (25) of the said shoulder.

7. Liquid filter according to one of Claims 5 and 6, **characterized in that** the form seal (48) runs, in the region of its circular portions, essentially along the outer edge of the lower end cap (46), and the indentation (53), in its radial extent, is equal to or smaller than the radial width of the annular lower end cap (46).

8. Liquid filter according to one of Claims 1 to 7, **characterized in that** the lower part (12) comprising the filter insert (16) and the water storage space (27) is produced in one piece.

9. Liquid filter according to one of Claims 1 to 8, **characterized in that** the inflow connection (17) is a connection.piece which lies in a plane running radially to the filter longitudinal axis (28) and which leads up to the outer wall of the plinth portion (24) in a region in which an inflow duct (29) running axially parallel to the filter longitudinal axis runs in the plinth portion (24) and is connected to the heating device (32) via an orifice (30) in the bottom (26).

10. Liquid filter according to one of Claims 4 to 9, **characterized in that** the outflow duct (37) runs straight, in particular axially parallel to the filter longitudinal axis (28), and its duct orifice (39) lies in a widened region of the shoulder surface (25).

11. Liquid filter according to one of Claims 1 to 10, **characterized in that** the lid-shaped upper part (13) is releasably connected to the lower part (12) via a quick-action screw fastening (14).

12. Liquid filter according to Claim 11, **characterized in that** the upper part (13) has a central tubular connection piece (56) which projects into the filter insert (16) and against the outer surface (57) of which bears a sealing ring (58) which separates a dirty side and a clean side from one another and which is attached, in particular, to the inner edge of the upper end cap (47).

13. Liquid filter according to Claim 12, **characterized in that** the upper part (13) has a connection piece running radially to the longitudinal axis, as an outflow connection (21), the outflow duct (59) of which is connected in an angled form to the clean side (19) via the tubular connection piece (56), and **in that** a second outflow connection piece (61), lying, in particular, coaxially to the first outflow connection piece, is arranged, which is connected to the clean side (19) via an overflow valve (63).

14. Liquid filter according to Claim 13, **characterized in that** the overflow valve (63) is designed as a valve cartridge which is arranged at the free end of the tubular connection piece (56) and projects into the clean-side inner space (19) of the filter insert (16) and which protects a second outflow duct (60) leading to the second outflow connection piece (61).

15. Liquid filter according to one of Claims 1 to 14, **characterized in that**, for the filter insert (16), an anti-rotation device (43) is provided, which, in particular, has a finger-like rib (42) fastened to the bottom (26) and securing the lower end cap (46) in its rotary position.

16. Liquid filter according to Claim 13 or 14, **characterized in that** the first outflow duct (59) in the tubular connection piece (56) has an annular cross section and runs concentrically to the second outflow duct (60).

17. Liquid filter according to one of Claims 4 to 16, **characterized in that** the duct orifice (39) and the shoulder surface (25) lie in the same radial plane, from which the lower end cap (46) is held at a distance by the form sealing ring (48).

18. Liquid filter according to one of Claims 4 to 17, **characterized in that** the annularly designed lower end cap (46) has fastened to it a holding plate (49) which forms with the end cap a radially outwardly open annularly running slot, and **in that** the form seal (48) having an L-shaped cross section is suspended with one leg in the slot.

19. Liquid filter according to one of Claims 1 to 18, **characterized in that** the water discharge (44) has an outflow connection piece which is arranged radially on the outside of the plinth portion (24) and which opens, level with the bottom (26), into the water storage space (27).

20. Liquid filter according to one of Claims 1 to 19, **characterized in that** fastening means (65) serving for fastening the liquid filter (10) to a machine part are arranged, level with the filter insert (16), on the outside of the lower part (12).

## Revendications

1. Filtre à liquide pour purifier un carburant, avec une enceinte (11) composée de matière plastique, qui présente une partie inférieure en forme de coupe (12) avec un raccord d'entrée (17), et une partie supérieure (13) en forme de couvercle avec un raccord de sortie (21) pour le carburant purifié, dans lequel la partie inférieure (12) et la partie supérieure (13) sont assemblées l'une à l'autre de façon séparable et reçoivent dans leur volume intérieur un élément de filtre (16) cylindrique creux remplaçable, qui est parcouru radialement de l'extérieur vers l'intérieur et qui est monté entre le raccord d'entrée et le raccord de sortie, dans lequel son capuchon d'extrémité frontal supérieur (47) s'applique de façon étanche sur la partie supérieure, tandis que son capuchon d'extrémité inférieur (46) est disposé de façon étanche dans l'enceinte (11) entre le côté encrassé et le côté propre,
**caractérisé en ce que**
la partie inférieure (12) présente, dans la région comprise entre un fond (26) et l'élément de filtre (16) une partie de socle (24) comportant le raccord d'entrée (17), dans laquelle est disposée une chambre d'accumulation de liquide (27), qui est en communication avec le côté propre (19) du filtre à liquide (10) et avec une sortie d'eau (44), et
dans la partie inférieure (12) en dessous de la chambre d'accumulation d'eau (27), est monté un dispositif de chauffage électrique (32), qui est en communication par un canal d'arrivée (29) avec le raccord d'entrée (17) et par un canal d'évacuation (37) avec le côté encrassé de l'élément de filtre (16), le canal d'arrivée (29) et le canal d'évacuation (37) étant disposés dans la partie de socle (24).

2. Filtre à liquide selon la revendication 1,
**caractérisé en ce que**
le dispositif de chauffage (32) est monté dans une partie de coquille (33) comportant un raccordement électrique (40), qui est assemblée de façon étanche et fixe par son bord (34) à la partie inférieure en forme de coupe (12) dans la région du fond (26) de celle-ci.

3. Filtre à liquide selon la revendication 2,
**caractérisé en ce que**
la partie de coquille (33) se compose de matière plastique et est assemblée de façon inséparable, en particulier est soudée à la partie inférieure (12).

4. Filtre à liquide selon l'une quelconque des revendications 1 à 3,
**caractérisé en ce qu'**
entre le capuchon d'extrémité inférieur (46) de l'élément de filtre (16) et la partie inférieure (12) de l'enceinte (11) est disposé un joint façonné (48) séparant l'un de l'autre le côté encrassé (18) et le côté propre (19), joint qui relie une ouverture de canal (39) formée par le canal d'évacuation (37) et tournée vers l'élément de filtre (16) au côté encrassé (18) de l'élément de filtre (16).

5. Filtre à liquide selon la revendication 4,
**caractérisé en ce que**
l'ouverture de canal (39) est située dans la région de la paroi extérieure circulaire de la partie de socle (24) et le joint façonné (48) présente sensiblement une forme annulaire, qui présente au moins un retrait (53) situé dans la région de l'ouverture de canal (39), dirigé vers l'intérieur et entourant en partie l'ouverture de canal (39).

6. Filtre à liquide selon l'une quelconque des revendications 1 à 5,
**caractérisé en ce que**
la partie inférieure (12) présente un épaulement interne (23) à la transition avec la partie de socle (24) et la partie de socle (24) présente au moins dans la région du canal d'évacuation (37), en particulier de son ouverture de canal (39), une surépaisseur (38) parallèle à l'axe et **en ce que** le joint façonné (48) est appliqué sur la surface (25) de l'épaulement de celle-ci.

7. Filtre à liquide selon l'une des revendications 5 et 6,
**caractérisé en ce que**
le joint façonné (48) repose dans la région de ses parties circulaires essentiellement sur le bord extérieur du capuchon d'extrémité inférieur (46) et le retrait (53) est égal ou inférieur, dans sa dimension radiale, à la largeur radiale du capuchon d'extrémité inférieur annulaire (46).

8. Filtre à liquide selon l'une quelconque des revendications 1 à 7,
**caractérisé en ce que**
la partie inférieure (12) comprenant l'élément de filtre (16) et la chambre d'accumulation d'eau (27) est formée d'une seule pièce.

9. Filtre à liquide selon l'une quelconque des revendications 1 à 8,
**caractérisé en ce que**
le raccord d'entrée (17) est un tuyau de raccord, qui est situé dans un plan radial par rapport à l'axe longitudinal du filtre (28) et qui mène dans une région sur la paroi extérieure de la partie de socle (24), dans laquelle un canal d'arrivée (29) ayant un axe parallèle à l'axe longitudinal du filtre arrive dans la partie de socle (24) et est en communication par une ouverture (30) dans le fond (26) avec le dispositif de chauffage (32).

10. Filtre à liquide selon l'une quelconque des revendications 4 à 9,
**caractérisé en ce que**
le canal d'évacuation (37) est rectiligne, en particulier avec un axe parallèle à l'axe longitudinal du filtre (28) et son ouverture de canal (39) est située dans une région élargie de la surface (25) de l'épaulement.

11. Filtre à liquide selon l'une quelconque des revendications 1 à 10,
**caractérisé en ce que**
la partie supérieure en forme de couvercle (13) est assemblée de façon séparable à la partie inférieure (12) par une fermeture vissée à pas rapide (14).

12. Filtre à liquide selon la revendication 11,
**caractérisé en ce que**
la partie supérieure (13) présente un embout tubulaire (56) central, pénétrant dans l'élément de filtre (16), sur la surface latérale (57) duquel est appliqué un joint annulaire (58) séparant l'un de l'autre un côté encrassé et un côté propre, qui est posé en particulier sur le bord intérieur du capuchon d'extrémité supérieur (47).

13. Filtre à liquide selon la revendication 12,
**caractérisé en ce que**
la partie supérieure (13) présente un tuyau radial par rapport à l'axe longitudinal, formant raccord de sortie (21), dont le canal de sortie (59) est en communication sous forme coudée avec le côté propre (19) par l'intermédiaire de l'embout tubulaire (56), et un deuxième tuyau de sortie (61), situé en particulier selon le même axe que le premier tuyau de sortie, est en communication avec le côté propre (19) via une soupape de débordement (63).

14. Filtre à liquide selon la revendication 13,
**caractérisé en ce que**
la soupape de débordement (63) est une cartouche de soupape disposée à l'extrémité libre de l'embout tubulaire (56), qui pénètre dans la chambre intérieure du côté propre (19) de l'élément de filtre (16) et qui protège un deuxième canal de sortie (60) menant vers le deuxième tuyau de sortie (61).

15. Filtre à liquide selon l'une quelconque des revendications 1 à 14,
**caractérisé en ce qu'**
il est prévu, pour l'élément de filtre (16), une sécurité de rotation (43), qui présente en particulier une nervure en forme de doigt (42) fixée au fond (26) et assurant le capuchon d'extrémité inférieur (46) dans sa position rotative.

16. Filtre à liquide selon la revendication 13 ou 14,
**caractérisé en ce que**
le premier canal de sortie (59) présente dans l'embout tubulaire (56) une section transversale annulaire et est concentrique au deuxième canal de sortie (60).

17. Filtre à liquide selon l'une quelconque des revendications 4 à 16,
**caractérisé en ce que**
l'ouverture de canal (39) et la surface (25) de l'épaulement sont situées dans le même plan radial, à distance duquel le capuchon d'extrémité inférieur (46) est maintenu par le joint façonné (48).

18. Filtre à liquide selon l'une quelconque des revendications 4 à 17,
**caractérisé en ce qu'**
une tôle de maintien (49) est fixée sur le capuchon d'extrémité inférieur (46), de forme annulaire, tôle qui forme avec le capuchon d'extrémité une fente annulaire ouverte radialement vers l'extérieur, et le joint façonné (48) présentant une section transversale en forme de L est suspendu par sa première branche dans la fente.

19. Filtre à liquide selon l'une quelconque des revendications 1 à 18,
**caractérisé en ce que**
la sortie d'eau (44) présente un tuyau de sortie, disposé radialement à l'extérieur sur la partie de socle (24) et qui s'ouvre dans la chambre d'accumulation d'eau (27) à hauteur du fond (26).

20. Filtre à liquide selon l'une quelconque des revendications 1 à 19
**caractérisé en ce que**
des moyens de fixation (65) servant à fixer le filtre à liquide (10) sur une partie de machine sont disposés extérieurement sur la partie inférireure (12), à hauteur de l'élément de filtre (16).
